# EUROPÄISCHE PATENTANMELDUNG

(11) **EP 1 364 824 A2**
(43) Veröffentlichungstag der Anmeldung: **26.11.2003**
(21) Anmeldenummer: 03010861.7
(22) Anmeldetag: 15.05.2003
(51) Int. Cl.: B60K 23/08

(54) **Steuervorrichtung für ein Zwischenachs-Differentialgetriebe**

(30) Priorität: 20.05.2002 US 151348
(71) Anmelder: DEERE & COMPANY, Moline, Illinois 61265-8098 (US)
(72) Erfinder: Rodeghiero, Reno Antonio, Hudson, IA 50643 (US)
(74) Vertreter: Lau-Loskill, Philipp, Dipl.-Phys.

(57) **Zusammenfassung**

Die vorliegende Erfindung betrifft eine Steuervorrichtung für ein Fahrzeug. Das Fahrzeug umfasst Hinterräder (22), lenkbare Vorderräder (18) und ein Zwischenachs-Differentialgetriebe (14), welches zur Übertragung von einem Drehmoment auf die Vorderräder (18) und auf die Hinterräder (22) dient. Das Zwischenachs-Differentialgetriebe (14) umfasst ein Stellglied, welches ein Verhältnis zwischen der Vorderradgeschwindigkeit und der Hinterradgeschwindigkeit regelt. Erfindungsgemäß ist ein Lenkeinschlagsensor (32) vorgesehen, welcher ein Lenkeinschlagsignal erzeugt, welches dem Lenkeinschlag der Vorderräder (18) entspricht. Weiterhin ist eine Steuereinheit (30) vorgesehen, welche das Stellglied als Funktion des detektierten Lenkeinschlags sowie des Geschwindigkeitsverhältnisses zwischen den Vorderrädern (18) und den Hinterrädern (22) regelt.

## Beschreibung

Die vorliegende Erfindung betrifft eine Steuervorrichtung für ein Zwischenachs-Differentialgetriebe eines Fahrzeugs. Das Fahrzeug umfasst Hinterräder, lenkbare Vorderräder und das Zwischenachs-Differentialgetriebe, welches zur Übertragung von Drehmoment auf die Vorderräder und auf die Hinterräder dient. Das Zwischenachs-Differentialgetriebe umfasst ein Stellglied, welches ein Verhältnis zwischen der Vorderradgeschwindigkeit und der Hinterradgeschwindigkeit stellt.

Fahrzeuge der eingangs genannten Art sind aus dem Stand der Technik beispielsweise aus der EP 0 112 421 B1 bekannt. Hierbei wird das von einer Kraftmaschine erzeugte Drehmoment anteilig auf die Vorderräder und auf die Hinterräder verteilt, wobei das Teilungsverhältnis nach einer Formel berechnet wird, in die die Radien der Vorderräder, der Hinterräder, die Untersetzungsverhältnisse des Zwischenachs-Differentialgetriebes zu jeweils den Vorderrädern und zu den Hinterrädern eingehen. Fahrzeuge dieser Art finden insbesondere bei landwirtschaftlichen oder industriellen Fahrzeugen Anwendung, so beispielsweise bei Traktoren.

Bei Traktoren mit einem mechanischen Vorderradantrieb und einer Ackermann-Lenkung ist es wünschenswert, wenn bei einer Kurvenfahrt des Traktors die Vorderräder sich schneller als die Hinterräder drehen. Hierdurch kann eine engere Kurve und ein besseres Zugverhalten erzielt werden. Eine unterschiedliche Drehgeschwindigkeit der Vorderräder und Hinterräder kann mit einem Zwischenachs-Differentialgetriebe oder Längsdifferential erreicht werden, das das von einer Kraftmaschine erzeugte Drehmoment entsprechend auf die Vorderräder und auf die Hinterräder überträgt. Bei landwirtschaftlich genutzten Traktoren ist ein solches Zwischenachs-Differentialgetriebe üblicherweise derart ausgebildet, dass das Verhältnis des auf die Vorderräder und auf die Hinterräder zu übertragende Drehmoment 30:70 beträgt, wobei dieses Verhältnis unabhängig von der Radgeschwindigkeit aufrecht erhalten wird. Ein solches System ist dann problematisch, wenn beim Betrieb des Traktors unter schwerer Belastung der Kraftschluss der Vorderräder oder der Hinterräder zum Untergrund verloren geht. In diesem Fall können die Vorderräder oder die Hinterräder übermäßig schlupfen, bis hin zu einem Zustand, an dem der Traktor zum Stehen kommt.

Die der Erfindung zugrunde liegende Aufgabe wird darin gesehen, eine Steuervorrichtung für ein Fahrzeug der eingangs genannten Art anzugeben und weiterzubilden, durch welche die vorgenannten Probleme überwunden werden. Insbesondere soll die Steuervorrichtung ein Zwischenachs-Differentialgetriebe zwischen Vorder- und Hinterachse derart einstellen, dass ein übermäßiger Schlupf der Räder - insbesondere bei einer Kurvenfahrt - vermieden wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist ein Lenkeinschlagsensor vorgesehen, welcher ein Lenkeinschlagsignal erzeugt, welches dem Lenkeinschlag der Vorderräder entspricht. Weiterhin ist eine Steuereinheit vorgesehen, welche das Stellglied als Funktion des detektierten Lenkeinschlags steuert und/oder regelt.

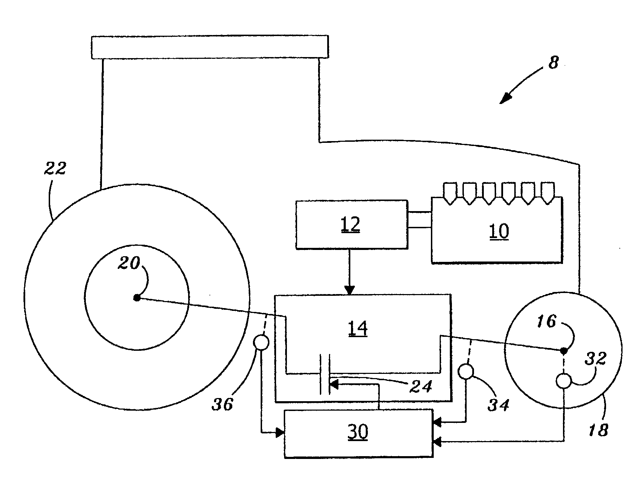

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt die einzige Figur
in einer schematischen Darstellung ein Ausführungsbeispiel der vorliegenden Erfindung.

Die einzige Figur zeigt einen Traktor 8, der einen ein Getriebe 12 antreibenden Antriebsmotor 10 aufweist, der insbesondere in Form eines Verbrennungsmotors ausgebildet sein kann. Ein Zwischenachs-Differentialgetriebe 14 überträgt das vom Getriebe 12 zur Verfügung gestellte Drehmoment einerseits auf die Vorderachse 16 und die Vorderräder 18 und andererseits auf die Hinterachse 20 und die Hinterräder 22. Das Zwischenachs-Differentialgetriebe 14 weist ein in der einzigen Figur nicht gezeigtes Planetengetriebe auf, das das vom Getriebe 12 eingeleitete Drehmoment auf die Vorderräder 18 und die Hinterräder 22 verteilt. Das Zwischenachs-Differentialgetriebe umfasst weiterhin eine abstimmbare modulierende Kupplung oder eine Wandlerkupplung 24, die eine Drehmomentverteilung zwischen der Vorderachse 16 und der Hinterachse 20 modulieren kann, die von einer Drehmomentaufteilung zwischen Vorder- und Hinterachse von einem Verhältnis 30:70 zu einem "völlig geschlossenen" Zustand, bei dem keine unterschiedliche Drehmomentaufteilung vorliegt, modulieren kann.

Eine Steuereinheit 30 empfängt ein Lenkeinschlagsignal von einem Lenkeinschlagsensor 32, ein Geschwindigkeitssignal der Vorderräder 18 von einem Geschwindigkeitssensor 34 und ein Geschwindigkeitssignal der Hinterräder 22 von einem Geschwindigkeitssensor 36. Die Steuereinheit 30 stellt der steuerbaren oder regelbaren Kupplung 24 ein Steuersignal zur Verfügung, wobei das Steuersignal bestimmt wird als Funktion des detektierten Lenkeinschlags und ob sich die Vorderräder 18 oder die Hinterräder 22 mit der geforderten Geschwindigkeit relativ zueinander drehen oder nicht. So könnte beispielsweise in einem Speicher der Steuereinheit 30 eine Lookup-Table abgelegt sein - wie z.B. in Form der nachfolgenden Tabelle - oder ein Verhältnis zwischen Lenkwinkel zur Differentialgeschwindigkeit aufweisen.

Die nachfolgende Tabelle enthält in der ersten Spalte verschiedene Lenkeinschlagwerte. In der zweiten Spalte sind theoretische optimale Vorderachse-zu-Hinterachse-Verhältniswerte angegeben. Falls das gemessene Vorderachse-zu-Hinterachse-Geschwindigkeitsverhältnis größer als der optimale Wert ist, haben die Vorderräder 18 einen überhöhten Schlupf. Die dritte Spalte der nachfolgenden Tabelle gibt die zulässigen Grenzwerte des Schlupfs der Vorderräder 18 an. Sobald der Schlupf des Vorderrads 18 den Grenzwert überschreitet, rückt die Kupplung 24 des Zwischenachs-Differentialgetriebes 14 ein, um genügend Drehmoment zu übertragen, so dass das Vorderachsezu-Hinterachse-Geschwindigkeitsverhältnis in den für den Schlupf vorgesehenen Grenzwertbereich gebracht wird.

Wenn das gemessene Vorderachse-zu-Hinterachse-Geschwindigkeitsverhältnis kleiner als der optimale Wert ist, haben die Hinterräder 22 einen überhöhten Schlupf. In der vierten Spalte der nachfolgenden Tabelle sind die zulässigen Grenzwerte des Schlupfs der Hinterräder 22 angegeben. Falls der Schlupf des Hinterrads 22 den Grenzwert unterschreitet, rückt die Kupplung 24 des Zwischenachs-Differentialgetriebes 14 ein, um genügend Drehmoment zu übertragen, so dass das Vorderachse-zu-Hinterachse-Geschwindigkeitsverhältnis in den für den Schlupf vorgesehenen Grenzwertbereich gebracht wird.

| Lenkeinschlag wert | optimaler Vorderachse-zu-Hinterachse-Verhältniswert | zulässiger Grenzwert des Schlupfs der Vorderräder | zulässiger Grenzwert des Schlupfs der Hinterräder |
|---|---|---|---|
| 0 | 1,00 | 1,08 | 0,95 |
| 5 | 1,00 | 1,08 | 0,95 |
| 10 | 1,02 | 1,10 | 0,95 |
| 15 | 1,04 | 1,12 | 0,95 |
| 20 | 1,06 | 1,14 | 0,95 |
| 25 | 1,10 | 1,20 | 0,95 |
| 30 | 1,16 | 1,28 | 0,95 |
| 35 | 1,22 | 1,34 | 0,95 |
| 40 | 1,31 | 1,46 | 0,95 |
| 45 | 1,41 | 1,60 | 0,95 |

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

### Bezugszeichenliste

- 8: Traktor
- 10: Antriebsmotor
- 12: Getriebe
- 14: Zwischenachs-Differentialgetriebe
- 16: Vorderachse
- 18: Vorderräder
- 20: Hinterachse
- 22: Hinterräder
- 24: modulierende Kupplung
- 30: Steuereinheit
- 32: Lenkeinschlagsensor
- 34: Geschwindigkeitssensor für (18)
- 36: Geschwindigkeitssensor für (22)

## Patentansprüche

1. Steuervorrichtung für ein Fahrzeug mit Hinterrädern (22), lenkbaren Vorderrädern (18) und einem Zwischenachs-Differentialgetriebe (14), mit welchem ein Drehmoment auf die Vorderräder (18) und auf die Hinterräder (22) übertragbar ist, wobei das Zwischenachs-Differentialgetriebe (14) wenigstens ein Stellglied aufweist, welches geeignet ist, ein Verhältnis zwischen der Vorderradgeschwindigkeit und der Hinterradgeschwindigkeit einzustellen, **gekennzeichnet durch** einen Lenkeinschlagsensor (32), mit welchem ein Lenkeinschlagsignal erzeugbar ist, welches dem Lenkeinschlag der Vorderräder (18) entspricht, und eine Steuereinheit (30), mit welcher das Stellglied in Abhängigkeit des detektierten Lenkeinschlags einstellbar ist.

2. Steuervorrichtung nach Anspruch 1, **dadurch gekennzeichnet, dass** mit der Steuereinheit (30) das Stellglied derart steuerbar oder regelbar ist, dass als Antwort auf eine Erhöhung des Lenkeinschlags das Verhältnis zwischen Vorderradgeschwindigkeit und Hinterradgeschwindigkeit erhöhbar ist.

3. Steuervorrichtung nach Anspruch 1 oder 2, **dadurch gekennzeichnet, dass** das wenigstens Stellglied eine modulierende Kupplung (24) aufweist.

4. Steuervorrichtung nach einem der vorhergehenden Ansprüche, **dadurch gekennzeichnet, dass** wenigstens ein Geschwindigkeitssensor (34) für ein Vorderrad vorgesehen ist, mit welchem ein Geschwindigkeitssignal des Vorderrads (18) erzeugbar ist, und dass ein wenigstens Geschwindigkeitssensor (36) für ein Hinterrad vorgesehen ist, mit welchem ein Geschwindigkeitssignal des Hinterrads (22) erzeugbar ist.

5. Steuervorrichtung nach Anspruch 4, **dadurch gekennzeichnet, dass** mit der Steuereinheit (30) das Stellglied in Abhängigkeit von dem detektierten Lenkeinschlag und der detektierten Radgeschwindigkeit regelbar ist.

6. Steuervorrichtung nach Anspruch 4 oder 5, **dadurch gekennzeichnet, dass** mit der Steuereinheit (30) der Vorderradschlupf oder der Hinterradschlupf mit Hilfe der Geschwindigkeitssensoren (34, 36) ermittelbar ist und dass mit der Steuereinheit (30) das Stellglied derart steuerbar oder regelbar ist, dass das Verhältnis zwischen Vorderradgeschwindigkeit und Hinterradgeschwindigkeit in Abhängigkeit von einem erhöhten Vorderradschlupf oder Hinterradschlupf erhöhbar ist.

7. Steuervorrichtung nach Anspruch 4, **dadurch gekennzeichnet, dass** das Stellglied eine modulierende Kupplung (24) aufweist und dass mit der Steuereinheit (30) die modulierende Kupplung (24) in Abhängigkeit der detektierten Signale regelbar ist.
